# FASCICULE DE BREVET EUROPEEN

(11) **EP 3 752 749 B1**
(45) Date de publication et mention de la délivrance du brevet: **04.05.2022**
(21) Numéro de dépôt: 19718789.1
(22) Date de dépôt: 22.03.2019
(51) Int. Cl.: F16D 51/22

(54) **ACTIONNEUR LINÉAIRE QUI COMPORTE UN DISPOSITIF DE BUTÉE ÉLASTIQUE**
LINEARSTELLGLIED MIT EINER ELASTISCHEN ANSCHLAGVORRICHTUNG
LINEAR ACTUATOR WHICH COMPRISES AN ELASTIC STOP DEVICE

(30) Priorité: 23.03.2018 FR 1852561
(43) Date de publication de la demande: 23.12.2020
(73) Titulaire: Hitachi Astemo France, 93700 Drancy (FR)
(72) Inventeur: BOURLON, Philippe, 77230 Dammartin-en-Goële (FR); CUBIZOLLES, Cyril, 93700 Drancy (FR)
(74) Mandataire: Brevalex
(86) Numéro de dépôt international: PCT/FR2019/050655
(87) Numéro de publication internationale: WO 2019/180390

(56) Documents cités:
- EP-A1- 2 813 407
- WO-A1-90/06877
- WO-A1-2016/097410
- DE-U1-202017 102 563
- US-A1- 2005 194 836
- US-A1- 2018 058 525

## Description

### DOMAINE TECHNIQUE

L'invention se rapporte à un actionneur linéaire de frein à tambour comportant un dispositif de butée destiné à limiter les risques d'endommager la motorisation électrique de l'actionneur.

L'invention se rapporte plus particulièrement à un actionneur linéaire permettant d'anticiper l'arrivée de l'actionneur linéaire à sa position extrême de butée.

### ÉTAT DE LA TECHNIQUE ANTÉRIEURE

Le document WO 90/06877 A1 décrit un actionneur linéaire pour frein à disque.

Un système de frein à tambour comporte notamment un actionneur linéaire destiné à appliquer sélectivement des segments de freinage contre le tambour du frein.

Cet actionneur linéaire comporte une motorisation électrique dont l'arbre rotatif de sortie coopère avec un écrou de l'actionneur linéaire qui est mobile en translation de façon à provoquer le déplacement des extrémités des segments.

L'actionneur linéaire est apte à parvenir à une position de fin de course pour laquelle l'écrou de l'actionneur linéaire vient en butée contre une portion fixe de l'actionneur.

Lorsque cette position de butée de l'écrou est atteinte, il est avantageux de cesser l'alimentation électrique de la motorisation électrique pour ne pas endommager l'un des composants de l'actionneur linéaire.

Afin de détecter que la position de butée est atteinte, le système de frein comporte un calculateur régulant le courant électrique alimentant la motorisation électrique.

Ce calculateur est apte à détecter des fluctuations dans ce courant électrique, qui consistent en des augmentations de la valeur du courant d'alimentation de la motorisation, qui sont représentatives d'efforts résistants sur l'actionneur linéaire.

Ainsi, le calculateur est apte à détecter lorsque l'écrou atteint la position de butée.

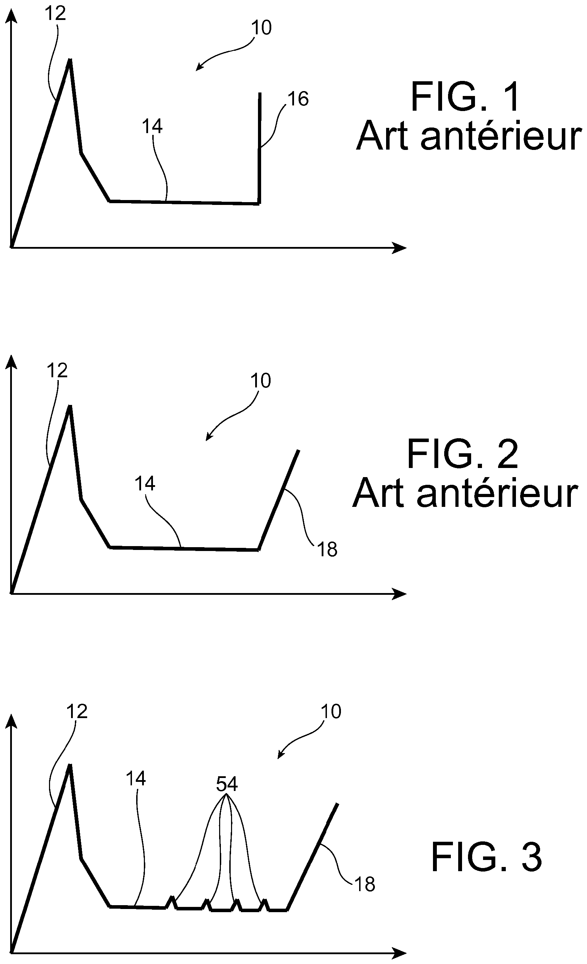

La figure 1 est un graphique représentant la variation de courant lors d'un exemple de fonctionnement de l'actionneur linéaire jusqu'à la position de butée.

Dans ce graphique, on a représenté une courbe 10 dont l'abscisse est un repère temporel et l'ordonnée est l'amplitude du courant alimentant la motorisation.

Cette courbe 10 comporte une première portion 12 correspondant à la mise en fonctionnement de la motorisation. Cette première portion 12 montre une forte augmentation du courant électrique, ce qui correspond à un couple en inertie de l'actionneur linéaire que la motorisation doit surmonter.

Une fois que les pièces mobiles de l'actionneur linéaire sont en mouvement, et comme on peut le voir par une deuxième portion 14 de la courbe 10, le courant à fournir à la motorisation est sensiblement constant.

Enfin, comme représenté par une troisième portion 16 de la courbe 10, lorsque la position de butée est atteinte, la résistance à l'avancement de l'écrou augmente brusquement.

A partir de cette troisième portion 16 de la courbe 10, le calculateur détecte la position de butée et provoque alors l'arrêt de l'alimentation électrique de la motorisation pour arrêter l'actionneur linéaire.

Cependant, entre l'instant pour lequel l'écrou vient en butée et l'instant pour lequel l'arrêt de l'alimentation est effectif, une certaine période de temps s'écoule, correspondant au temps de réaction du calculateur.

Pendant la durée de ce temps de réaction, la motorisation continue de produire son couple, ce qui risque d'endommager un composant de l'actionneur linéaire.

Pour compenser ce temps de réaction, il a été proposé de doter l'actionneur linéaire d'une bague mobile portant un organe élastique de butée.

Cet organe élastique est apte à venir coopérer avec une portion fixe de l'actionneur avant que l'écrou vienne lui-même en butée contre cette portion fixe de l'actionneur.

A partir du moment où cet organe élastique est en contact avec la portion fixe, il produit un couple résistant qui augmente au fur et à mesure que l'écrou se rapproche de la position de butée.

On a représenté à la figure 2 un graphique représentant la variation de courant lors d'un exemple de fonctionnement d'un actionneur linéaire comportant un tel organe élastique jusqu'à la position de butée.

Ce graphique est similaire à celui de la figure 1 et la courbe 10 de ce graphique comporte une première portion 12 et une deuxième portion 14 similaires à celles représentées à la figure 1 puisque ces étapes du fonctionnement de l'actionneur linéaire sont inchangées.

La courbe 10 comporte une troisième portion 18 qui montre une augmentation progressive du courant, correspondant à la déformation élastique progressive de l'organe élastique.

Cette déformation élastique dure un certain temps, ce qui permet au calculateur de détecter que l'organe élastique coopère avec la portion fixe, avant que l'écrou vienne en butée.

Ainsi, en détectant la troisième portion 18 de la courbe 10, le calculateur peut initier l'arrêt de la motorisation avant d'atteindre la position de butée.

Cependant, il a été constaté que le temps de réaction du calculateur est supérieur à la durée de cette troisième portion. Ainsi, même si la durée pendant laquelle la motorisation exerce son action alors que l'écrou est en butée est réduite par rapport au mode de réalisation représenté à la figure 1, cette période de temps de butée de l'écrou est encore présente.

L'invention a pour but de proposer un actionneur linéaire de frein à tambour qui est conçu pour réduire encore plus durée pendant laquelle la motorisation exerce son action alors que l'écrou est en butée.

### EXPOSÉ DE L'INVENTION

L'invention propose un actionneur linéaire de frein à tambour de véhicule, notamment automobile, qui comporte :
- une motorisation électrique; et
- un dispositif de butée (20) comportant une butée fixe (22) et une bague (24) montée mobile en déplacement par rapport à la butée fixe (22) selon un mouvement hélicoïdal, qui est entrainée en déplacement par ladite motorisation électrique,
   dans lequel la bague (24) est mobile par rapport à la butée fixe (22), d'amont en aval le long d'un axe d'hélice, entre une pluralité de positions d'actionnement et une position aval de butée dans laquelle la bague (24) est en butée contre la butée fixe (22), ladite position de butée étant située la plus en aval par rapport aux position d'actionnement,
   dans lequel la bague (24) porte un organe élastique (46) qui coopère avec une portion (38) associée de la butée fixe (22) lorsque la bague (24) est située dans une position d'actionnement située axialement entre la position de butée et une position d'actionnement prédéfinie, pour produire un couple résistant s'opposant au déplacement de la bague (24) vers la position de butée,
   dans lequel la motorisation électrique comporte un calculateur permettant de détecter des variations dans le courant électrique alimentant la motorisation électrique en fonction de la valeur dudit couple résistant,
   caractérisé en ce que la butée fixe (22) comporte au moins une protubérance (52) avec laquelle l'organe élastique (46) coopère lorsque la bague (24) est dans au moins une autre position d'actionnement prédéfinie située à distance et en amont de la position d'actionnement prédéfinie pour produire une variation d'un couple résistant lors du franchissement de ladite au moins une protubérance (52) par l'organe élastique (46).

La coopération de l'organe élastique avec la protubérance permet de produire une variation dans le courant alimentant la motorisation avant que l'organe élastique ne coopère avec la butée. Le calculateur peut alors prédire quelle est la position de la bague mobile par rapport à la butée pour initier l'arrêt de la motorisation à temps.

De préférence, la butée fixe (22) comporte plusieurs protubérances (52) avec chacune desquelles l'organe élastique (46) coopère successivement lors d'un déplacement de la bague (24) vers la position de butée.

De préférence, l'organe élastique (46) comporte un tronçon (50) s'étendant parallèlement à l'axe (A) d'hélice qui est destiné à coopérer avec ladite portion (38) de la butée fixe (22) et avec ladite au moins une protubérance (52).

De préférence, chaque protubérance (52) fait saillie radialement par rapport à une paroi annulaire (42) de la butée fixe (22), le long de laquelle dite paroi annulaire (42), ledit tronçon de l'organe élastique (46) se déplace lors du déplacement de la bague (24) vers la position de butée.

De préférence, la section selon un plan axial de chaque protubérance (52) est de forme arrondie.

De préférence, la butée fixe (22) comporte une rampe (34) hélicoïdale comportant une face radiale (38) contre laquelle ledit tronçon (50) de l'organe élastique (46) est apte à venir en appui lorsque la bague (24) est située dans une position d'actionnement située axialement entre la position de butée et ladite position d'actionnement prédéfinie.

De préférence, le procédé comporte une phase d'alimentation de la motorisation électrique pour provoquer un déplacement de la bague (24) depuis une position d'actionnement amont, qui est située en amont de chaque position d'actionnement prédéfinie, vers la position de butée, et au cours de laquelle le calculateur détecte les variations dans le courant électrique alimentant la motorisation électrique, lorsque l'organe élastique (46) coopère avec chaque protubérance (52), et le calculateur génère une commande pour arrêter le déplacement de la bague (24) avant que l'organe élastique (46) ne coopère avec la portion associée (38) de la butée fixe (22) à partir de la détection des variations dans le courant électrique alimentant la motorisation électrique, lorsque l'organe élastique (46) coopère successivement avec les protubérance (52).

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est un graphique représentant la variation du courant alimentant la motorisation d'un actionneur linéaire de frein à tambour selon l'art antérieur
- la figure 2 est un graphique similaire à celui de la figure 1 représentant la variation du courant alimentant la motorisation d'un actionneur linéaire de frein à tambour selon un autre mode de réalisation de l'art antérieur;
- la figure 3 est un graphique similaire à celui de la figure 1 représentant la variation du courant alimentant la motorisation d'un actionneur linéaire de frein à tambour selon l'invention ;
- les figures 4A et 4B sont des représentations schématiques en perspective d'une bague mobile et d'une butée fixe d'un actionneur linéaire de frein à tambour selon l'invention ;
- la figure 5 est un détail en perspective à plus grande échelle montrant les parties de la butée fixe destinées à coopérer avec l'organe élastique ;
- les figures 6A à 6E sont des vues similaires à celle de la figure 5, montrant comment l'organe élastique coopère avec la butée fixe.

### EXPOSÉ DÉTAILLÉ DE MODES DE RÉALISATION PARTICULIERS

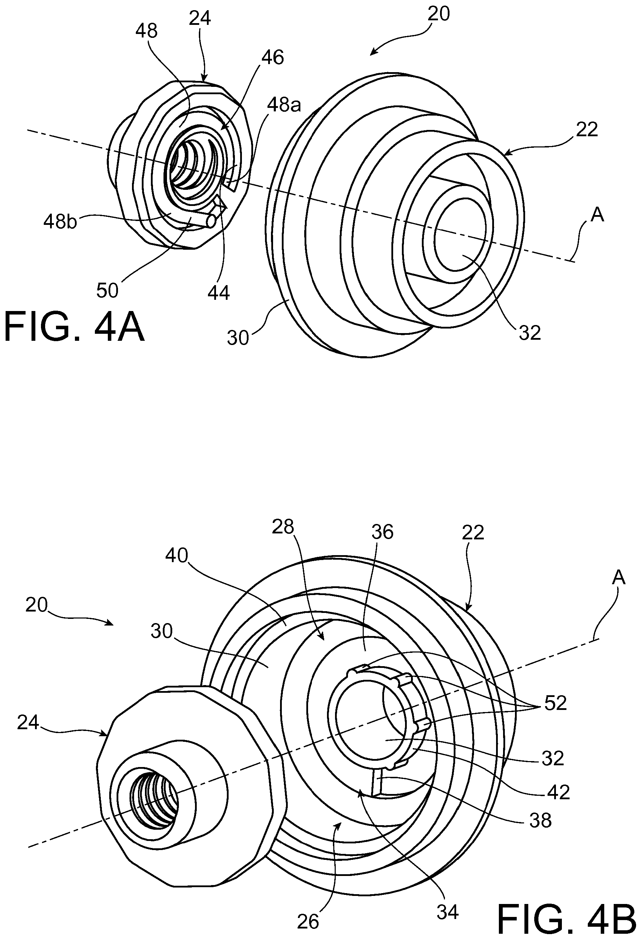

On a représenté aux figures 4A et 4B un dispositif de butée 20 d'un actionneur linéaire d'un frein à tambour de véhicule automobile.

Ce dispositif de butée 20 coopère avec une motorisation électrique (non représentée) de l'actionneur linéaire.

La motorisation électrique comporte un élément fileté rotatif tel qu'un arbre rotatif, qui coopère avec un élément fileté complémentaire qui est monté coulissant pour appliquer sélectivement des segments de freinage contre le tambour dudit frein.

Pour cela, l'élément fileté complémentaire provoque sélectivement l'écartement respectif de premières extrémités des segments.

Le dispositif de butée 20 comporte une butée fixe 22 qui est solidaire du tambour du frein et une bague 24 qui est montée mobile en déplacement par rapport à la butée fixe 22 selon un mouvement hélicoïdal centré sur un axe principal A.

La bague 24 est entrainée en déplacement par la motorisation électrique, notamment par l'élément fileté rotatif.

Lors d'un actionnement du frein à tambour, la bague 24 se déplace par rapport à la butée fixe 22 selon le mouvement hélicoïdal, en tournant autour de l'axe principal A et en se rapprochant de la butée fixe 22.

La bague 24 se déplace le long de l'axe principal A à partir d'une position amont, en direction d'une position aval de butée, en passant par une pluralité de positions d'actionnement qui sont située en aval de la position amont et en aval de la position de butée.

Lorsque la bague 24 atteint la position de butée, elle est en butée axialement et/ou angulairement contre la butée fixe 22, ce qui empêche tout mouvement de la bague 24 au-delà de la position aval de butée.

La butée fixe 22 délimite un logement en creux 26 coaxial à l'axe principal A et dans lequel la bague 24 pénètre lors de son déplacement vers la position aval de butée. Ce logement en creux 26 est ouvert axialement vers l'amont et il est délimité par une paroi de fond 28 et une paroi périphérique circonférentielle 30 qui s'étend axialement vers l'amont à partir du bord radialement externe de la paroi de fond 28.

Un orifice central 32 de passage de l'élément fileté rotatif est formé dans la paroi de fond 28, coaxialement à l'axe principal A.

La paroi de fond 28 comporte une rampe hélicoïdale 34formée dans sa face aval qui est destinée à coopérer avec la bague 24 lorsque la bague 24 se rapproche de la position de butée et atteint cette position de butée.

La rampe hélicoïdale 34 comporte une face hélicoïdale 36 faisant face axialement à la bague 24, qui s'étend sur un angle de 360 degrés autour de l'axe principal A. les deux extrémités angulaires 36a de la face hélicoïdale 36 sont décalées axialement l'une par rapport à l'autre et sont reliées l'une à l'autre par une face radiale 38.

La paroi de fond 28 comporte en outre une paroi annulaire radialement externe 40 et une paroi annulaire radialement interne 42 qui sont situées radialement, par rapport à l'axe principal A, de part et d'autre de la face hélicoïdale 36 et qui délimitent radialement la face hélicoïdale.

La bague 24 comporte une paroi annulaire 44 s'étendant principalement radialement, qui fait face à la paroi de fond 28 de la butée fixe 22.

La bague 24 porte un organe élastique 46 qui est monté sur une face de la paroi annulaire 44 qui est située en vis-à-vis de la butée fixe 22.

L'organe élastique 46 comporte un premier tronçon 48 qui est cintré en forme d'arc de cercle centré sur l'axe principal A et dont une première extrémité 48a de ce premier tronçon 48 est fixée à la paroi annulaire 44. L'organe élastique 46 comporte un deuxième tronçon 50 qui est relié à une deuxième extrémité 48b du premier tronçon 48 et qui s'étend parallèlement à l'axe principal A en direction de la butée fixe 22.

Le deuxième tronçon 50 de l'organe élastique 46 fait saillie axialement par rapport à la paroi annulaire 44 en direction de la butée fixe 22.

La distance radiale entre le deuxième tronçon 50 et l'axe principal A est comprise entre le rayon interne de la paroi annulaire radialement externe 40 et le rayon externe de la paroi annulaire radialement interne 42. Ainsi, le deuxième tronçon 50 est situé radialement, par rapport à l'axe principal A, au niveau de la rampe hélicoïdale 34.

L'organe élastique 46 est destiné à coopérer avec la rampe hélicoïdale 34 de la butée fixe 22 lorsque la bague 24 se rapproche de la position de buttée.

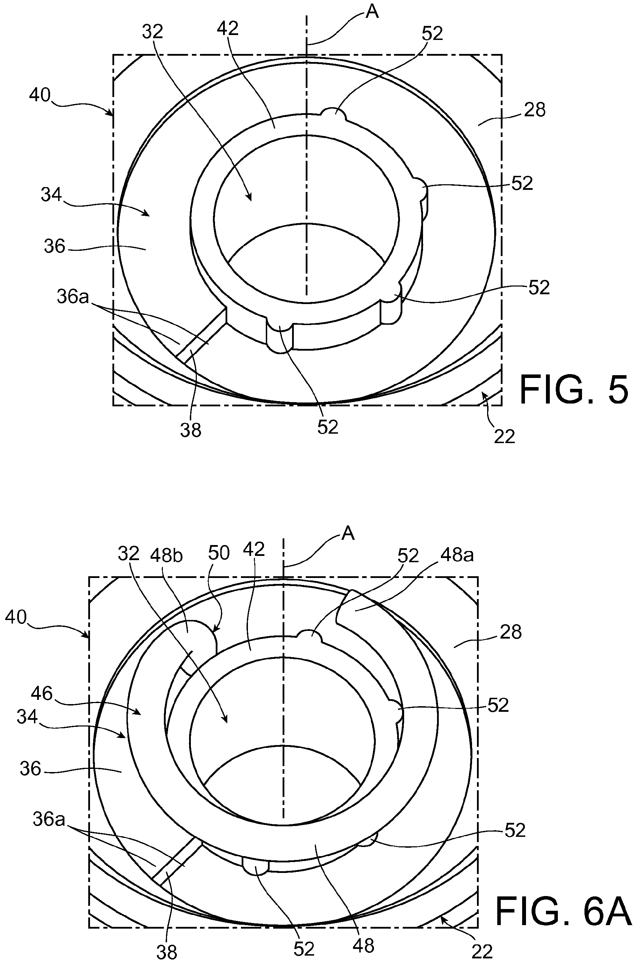

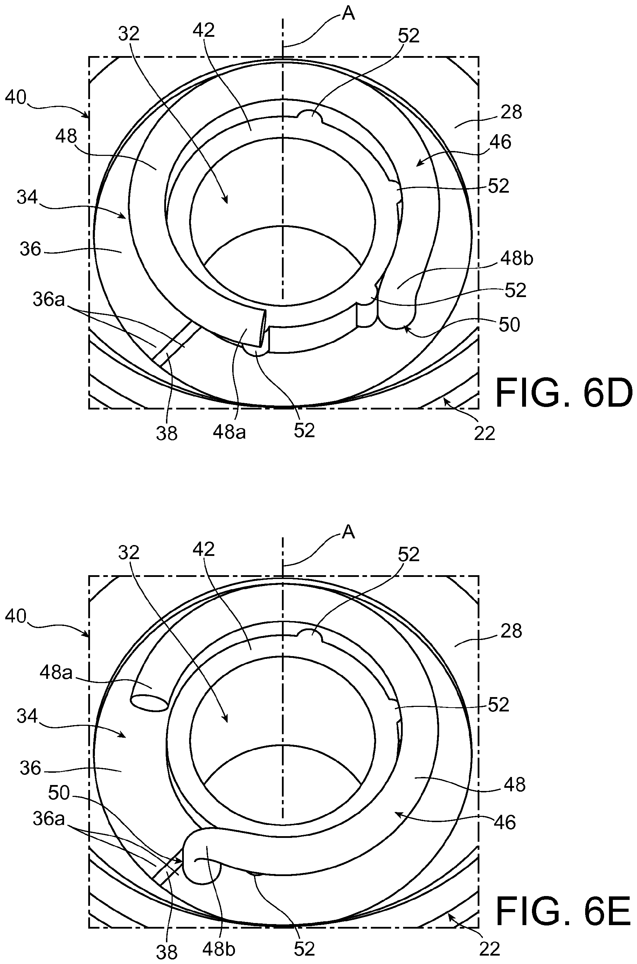

En particulier, comme on peut le voir à la figure 6E, lorsque la bague 24 atteint une position d'actionnement prédéfinie, le deuxième tronçon 50 vient en contact avec la face radiale 38 de la rampe hélicoïdale 34.

A partir de cette position d'actionnement prédéfinie de la bague 24 par rapport à la butée fixe 22, jusqu'à la position de butée, le deuxième tronçon 50 de l'organe élastique 46 est en contact avec la face radiale 38 de la rampe hélicoïdale 34.

L'organe élastique 46 est conçu pour se déformer élastiquement afin de permettre la rotation de la bague 24 par rapport à la butée fixe 22.

L'organe élastique 46 produit en contrepartie un couple résistant s'opposant au déplacement de la bague 24 vers la position de butée.

L'actionneur linéaire comporte un calculateur (non représenté) qui gère le courant électrique alimentant la motorisation électrique. Ce calculateur est capable de détecter des variations dans le courant électrique alimentant la motorisation électrique.

En particulier, lorsque la motorisation électrique est soumise à un couple résistant tel que celui produit par le l'organe élastique 46, le courant électrique alimentant la motorisation électrique est soumis à des variations que le calculateur détecte.

On a représenté à la figure 3, une courbe 10 représentant des variations dans le courant électrique alimentant la motorisation électrique, qui est détecté par le calculateur.

Cette courbe comporte une première portion 12 correspondant à la mise en fonctionnement de la motorisation. Cette première portion 12 montre une forte augmentation du courant électrique, ce qui correspond à un couple en inertie de l'actionneur linéaire que la motorisation doit surmonter.

Une fois que les pièces mobiles de l'actionneur linéaire sont en mouvement, le courant diminue pour devenir ensuite sensiblement constant, comme on peut le voir par une deuxième portion 14 de la courbe 10.

La courbe 10 comporte une troisième portion 18 qui montre une augmentation progressive du courant, correspondant à la déformation élastique progressive de l'organe élastique.

Cette déformation élastique dure un certain temps, ce qui permet au calculateur de détecter que l'organe élastique coopère avec la portion fixe, avant que l'écrou vienne en butée.

Ainsi, en détectant la troisième portion 18 de la courbe 10, le calculateur peut initier l'arrêt de la motorisation avant d'atteindre la position de butée.

Cependant, la période de temps qui s'écoule entre le franchissement par la bague 24 de la position d'actionnement prédéfinie, pour laquelle le deuxième tronçon 50 de l'organe élastique vient en contact avec la face radiale 38 de la rampe hélicoïdale 34 et la position de butée de la bague 24 est trop faible pour permettre au calculateur d'arrêter complètement l'actionneur linéaire.

Il s'en suit que l'actionneur linéaire est soumis pendant une courte période de temps à des efforts de blocage.

Pour permettre au calculateur d'anticiper encore l'arrivée de la bague 24 en position de butée, le dispositif de butée comporte des protubérances 52 avec chacune desquelles l'organe élastique 46 coopère lorsque la bague 24 vient dans une position d'actionnement située en amont de la position d'actionnement définie précédemment, pour laquelle le deuxième tronçon 50 de l'organe élastique 46 vient en appui contre la face radiale 38 de la rampe hélicoïdale 34.

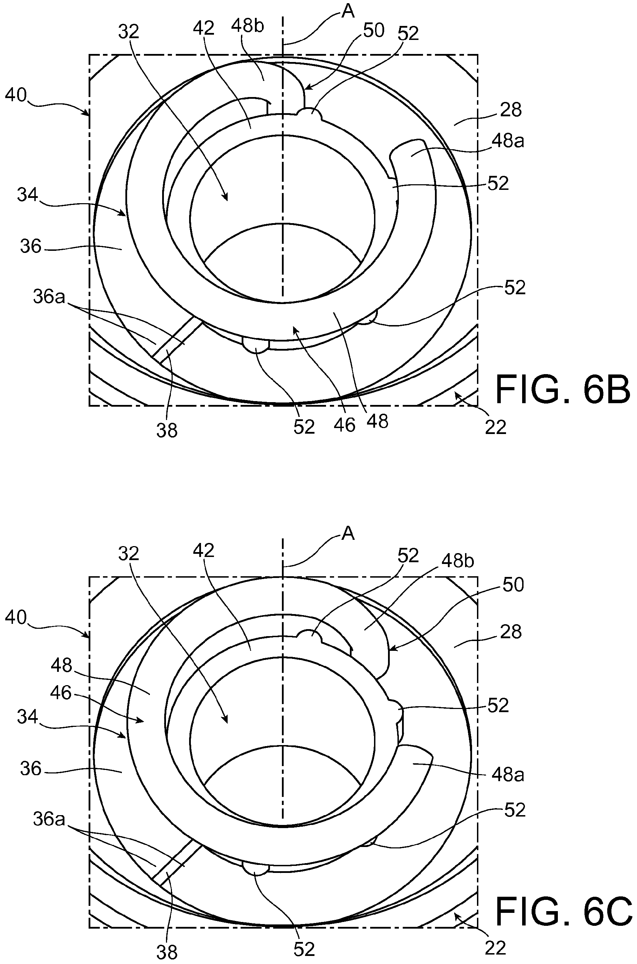

Dans un premier temps représenté à la figure 6B, le deuxième tronçon 50 de l'organe élastique 46 vient en appui contre une première protubérance 52. La protubérance 52 s'oppose au déplacement du deuxième tronçon 50 de l'organe élastique 46.

Ensuite, la bague 24 continue son déplacement vers la position de butée tandis que le deuxième tronçon 50 de l'organe élastique 46 est en appui contre la protubérance.

Par conséquent, l'organe élastique 46 se déforme élastiquement, produisant un couple résistant variables opposant au déplacement de la bague 24 vers la position de butée. Aussi, l'effort d'appui du deuxième tronçon 50 de l'organe élastique 46 contre la protubérance 52 augmente progressivement de la même manière.

Lorsque la bague 24 s'est déplacée selon une amplitude déterminée, la combinaison entre l'augmentation de l'effort d'appui et le profil de la protubérance permet au deuxième tronçon 50 de se désengager de son contact avec la protubérance 52. Par exemple, le deuxième tronçon 50 se déplace radialement vers l'extérieur pour franchir la protubérance 52.

Après ce franchissement de la protubérance, et comme on peut le voir à la figure 6C, le deuxième tronçon de l'organe élastique 46 n'est plus bloqué par la protubérance 52, permettant son déplacement sans produire de couple résistant.

Le calculateur de l'actionneur linéaire détecte la variation du couple résistant produit par l'organe élastique 46 lorsque le deuxième tronçon 50 de l'organe élastique 46 est retenu puis est relâché par la protubérance 52.

Cette détection est représentée à la figure 3 par une bosse 54 dans la deuxième portion 14 de la courbe 10.

De préférence, le dispositif de butée 20 comporte plusieurs protubérances 52 avec lesquelles le deuxième tronçon 50 de l'organe élastique 46 est consécutivement destiné à coopérer lors du déplacement de la bague 24 vers la position de butée, comme représenté par exemple à la figure 6D.

On retrouve cette pluralité de protubérances 52 par une succession de bosses 54 sur la courbe 10 de la figure 3.

Ici, le dispositif de butée comporte quatre protubérances 52, ce qui signifie que la courbe 10 comporte quatre bosses 54.

Il sera compris que l'invention n'est pas limitée à ce nombre de protubérances 52 et donc que le dispositif de butée 20 peut comporter un nombre de protubérances 52 plus important ou moins important.

Aussi, de préférence, les protubérances 52 sont réparties de manière régulière, c'est-à-dire que le pas entre deux protubérances 52 adjacentes est égal à une valeur prédéfini.

Il sera compris que l'invention n'est pas limitée à ce mode de réalisation et que l'espacement entre les protubérances 52 peut être par exemple décroissant au fur et à mesure que l'on se rapproche de la face radiale 38.

A partir de la détection de la succession de ces bosses 54 dans la courbe 10, le calculateur en déduit de l'approche de la position de butée, avant que l'organe élastique 46 ne coopère avec la face radiale, ce qui lui permet de mettre en oeuvre l'arrêt de l'actionneur linéaire à temps avant d'atteindre effectivement la position de butée.

Selon le mode de réalisation représenté aux figures, et comme représenté à la figure 5, chaque protubérance 52 consiste en un bossage faisant saillie radialement par rapport à la paroi annulaire radialement interne 42 de la paroi de fond 28.

La position radiale du deuxième tronçon 50 de l'organe élastique 46 est définie pour que le deuxième tronçon 50 de l'organe élastique 46 se déplace le long de la paroi annulaire radialement interne 42.

Aussi, le profil de chaque protubérance 52, c'est-à-dire sa section selon un plan perpendiculaire à l'axe principal lest en forme de secteur de disque, c'est-à-dire un profil arrondi.

Il sera compris que l'invention n'est pas limitée à ce profil des protubérances 52 qui peuvent être par exemple en forme de section triangulaire.

La hauteur radiale de chaque protubérance 52 est de préférence inférieure au rayon de la section du deuxième tronçon 50 de l'organe élastique, pour faciliter le franchissement de chaque protubérance 52 par le deuxième tronçon 50.

Aussi, la distance entre le sommet de chaque protubérance et la paroi annulaire radialement externe 40 est supérieur au diamètre du, pour offrir un espace de passage du deuxième tronçon 50 de l'organe élastique 46 lors du franchissement de chaque protubérance.

### NOMENCLATURE :

- A: axe principal
- 10: courbe
- 12: première portion
- 14: deuxième portion
- 16: troisième portion
- 18: troisième portion
- 20: dispositif de butée
- 22: butée fixe
- 24: bague
- 26: logement en creux
- 28: paroi de fond
- 30: paroi périphérique circonférentielle
- 32: orifice central
- 34: rampe hélicoïdale
- 36: face hélicoïdale
- 36a: extrémités angulaires
- 38: face radiale
- 40: paroi annulaire radialement externe
- 42: paroi annulaire radialement interne
- 44: paroi annulaire
- 46: organe élastique
- 48: premier tronçon
- 48a: première extrémité
- 48b: deuxième extrémité
- 50: deuxième tronçon
- 52: protubérances
- 54: bosses

## Revendications

1. Actionneur linéaire de frein à tambour de véhicule, notamment automobile, qui comporte :
une motorisation électrique; et
un dispositif de butée (20) comportant une butée fixe (22) et une bague (24) montée mobile en déplacement par rapport à la butée fixe (22) selon un mouvement hélicoïdal, qui est entrainée en déplacement par ladite motorisation électrique,
dans lequel la bague (24) est mobile par rapport à la butée fixe (22), d'amont en aval le long d'un axe d'hélice entre une pluralité de positions d'actionnement et une position aval de butée dans laquelle la bague (24) est en butée contre la butée fixe (22), ladite position de butée étant située la plus en aval par rapport aux position d'actionnement,
dans lequel la bague (24) porte un organe élastique (46) qui coopère avec une portion (38) associée de la butée fixe (22) lorsque la bague (24) est située dans une position d'actionnement située axialement entre la position de butée et une position d'actionnement prédéfinie, pour produire un couple résistant s'opposant au déplacement de la bague (24) vers la position de butée,
dans lequel la motorisation électrique comporte un calculateur permettant de détecter des variations dans le courant électrique alimentant la motorisation électrique en fonction de la valeur dudit couple résistant,
**caractérisé en ce que** la butée fixe (22) comporte au moins une protubérance (52) avec laquelle l'organe élastique (46) coopère lorsque la bague (24) est dans au moins une autre position d'actionnement prédéfinie située à distance et en amont de la position d'actionnement prédéfinie pour produire une variation d'un couple résistant lors du franchissement de ladite au moins une protubérance (52) par l'organe élastique (46).

2. Actionneur linéaire selon la revendication précédente, **caractérisé en ce que** la butée fixe (22) comporte plusieurs protubérances (52) avec chacune desquelles l'organe élastique (46) coopère successivement lors d'un déplacement de la bague (24) vers la position de butée.

3. Actionneur linéaire selon l'une quelconque des revendications précédentes, **caractérisé en ce que** l'organe élastique (46) comporte un tronçon (50) s'étendant parallèlement à l'axe (A) d'hélice qui est destiné à coopérer avec ladite portion (38) de la butée fixe (22) et avec ladite au moins une protubérance (52).

4. Actionneur linéaire selon la revendication précédente, **caractérisé en ce que** chaque protubérance (52) fait saillie radialement par rapport à une paroi annulaire (42) de la butée fixe (22), le long de laquelle dite paroi annulaire (42), ledit tronçon de l'organe élastique (46) se déplace lors du déplacement de la bague (24) vers la position de butée.

5. Actionneur linéaire selon l'une quelconque des revendications précédentes, **caractérisé en ce que** la section selon un plan axial de chaque protubérance (52) est de forme arrondie.

6. Actionneur linéaire selon l'une quelconque des revendications précédentes, **caractérisé en ce que** la butée fixe (22) comporte une rampe (34) hélicoïdale comportant une face radiale (38) contre laquelle ledit tronçon (50) de l'organe élastique (46) est apte à venir en appui lorsque la bague (24) est située dans une position d'actionnement située axialement entre la position de butée et ladite position d'actionnement prédéfinie.

7. Procédé de commande d'un actionneur linéaire de frein à tambourde véhicule selon l'une quelconque des revendications précédentes, qui comporte une phase d'alimentation de la motorisation électrique pour provoquer un déplacement de la bague (24) depuis une position d'actionnement amont, qui est située en amont de chaque position d'actionnement prédéfinie, vers la position de butée, et au cours de laquelle le calculateur détecte les variations dans le courant électrique alimentant la motorisation électrique, lorsque l'organe élastique (46) coopère avec chaque protubérance (52),
**caractérisé en ce que** le calculateur génère une commande pour arrêter le déplacement de la bague (24) avant que l'organe élastique (46) ne coopère avec la portion associée (38) de la butée fixe (22) à partir de la détection des variations dans le courant électrique alimentant la motorisation électrique, lorsque l'organe élastique (46) coopère successivement avec les protubérance (52).

8. Frein à tambour de véhicule, notamment automobile, **caractérisé en ce qu'**il comporte un actionneur linéaire selon l'une quelconque des revendications 1 à 6.

9. Véhicule automobile comportant un frein à tambour, un calculateur et un actionneur linéaire selon l'une quelconque des revendications 1 à 6.

## Patentansprüche

1. Linearstellglied einer Trommelbremse eines Fahrzeugs, insbesondere eines Kraftfahrzeugs, das umfasst:
einen elektrischen Antrieb; und
eine Anschlagvorrichtung (20), umfassend einen feststehenden Anschlag (22) und einen Ring (24), der in Bezug auf den feststehenden Anschlag (22) gemäß einer schraubenförmigen Bewegung verlagerbar gelagert ist und der von dem elektrischen Antrieb zur Verlagerung angetrieben wird, wobei der Ring (24) in Bezug auf den feststehenden Anschlag (22) von stromauf nach stromab entlang einer Schraubenachse zwischen einer Mehrzahl von Betätigungsstellungen und einer stromabwärtigen Anschlagstellung, in welcher der Ring (24) im Anschlag am feststehenden Anschlag (22) ist, beweglich ist,
wobei sich die Anschlagstellung in Bezug auf die Betätigungsstellungen am weitesten stromab befindet,
wobei der Ring (24) ein elastisches Element (46) trägt, das mit einem zugeordneten Bereich (38) des feststehenden Anschlags (22) zusammenwirkt, wenn sich der Ring (24) in einer Betätigungsstellung befindet, die sich axial zwischen der Anschlagstellung und einer vorgegebenen Betätigungsstellung befindet, um ein Widerstandsmoment zu erzeugen, das der Verlagerung des Rings (24) hin zur Anschlagstellung entgegenwirkt,
wobei der elektrische Antrieb einen Rechner umfasst, der es ermöglicht, Änderungen in dem den elektrischen Antrieb versorgenden elektrischen Strom in Abhängigkeit vom Wert des Widerstandsmoments zu detektieren,
**dadurch gekennzeichnet, dass** der feststehende Anschlag (22) mindestens einen Vorsprung (52) umfasst, mit dem das elastische Element (46) zusammenwirkt, wenn der Ring (24) in mindestens einer anderen vorgegebenen Betätigungsstellung ist, die beabstandet von und stromauf der vorgegebenen Betätigungsstellung gelegen ist, um eine Änderung eines Widerstandsmoments beim Überwinden des mindestens einen Vorsprungs (52) durch das elastische Element (46) zu erzeugen.

2. Linearstellglied nach dem vorhergehenden Anspruch, **dadurch gekennzeichnet, dass** der feststehende Anschlag (22) mehrere Vorsprünge (52) umfasst, mit denen das elastische Element (46) bei einer Verlagerung des Rings (24) hin zur Anschlagstellung jeweils nacheinander zusammenwirkt.

3. Linearstellglied nach einem der vorhergehenden Ansprüche, **dadurch gekennzeichnet, dass** das elastische Element (46) einen sich parallel zur Schraubenachse (A) erstreckenden Abschnitt (50) umfasst, der dazu bestimmt ist, mit dem Bereich (38) des feststehenden Anschlags (22) und mit dem mindestens einen Vorsprung (52) zusammenzuwirken.

4. Linearstellglied nach dem vorhergehenden Anspruch, **dadurch gekennzeichnet, dass** jeder Vorsprung (52) in Bezug auf eine ringförmige Wand (42) des feststehenden Anschlags (22) radial absteht, wobei sich der Abschnitt des elastischen Elements (46) bei der Verlagerung des Rings (24) hin zur Anschlagstellung entlang dieser ringförmigen Wand (42) verlagert.

5. Linearstellglied nach einem der vorhergehenden Ansprüche, **dadurch gekennzeichnet, dass** der Querschnitt jedes Vorsprungs (52) entlang einer axialen Ebene gerundet ist.

6. Linearstellglied nach einem der vorhergehenden Ansprüche, **dadurch gekennzeichnet, dass** der feststehende Anschlag (22) eine schraubenförmige Rampe (34) umfasst, die eine radiale Fläche (38) umfasst, an welcher der Abschnitt (50) des elastischen Elements (46) zur Anlage gelangen kann, wenn sich der Ring (24) in einer Betätigungsstellung befindet, die sich axial zwischen der Anschlagstellung und der vorgegebenen Betätigungsstellung befindet.

7. Verfahren zur Steuerung eines Linearstellglieds einer Trommelbremse eines Fahrzeugs nach einem der vorhergehenden Ansprüche, das eine Phase des Versorgens des elektrischen Antriebs umfasst, um eine Verlagerung des Rings (24) aus einer stromaufwärtigen Betätigungsstellung, die sich stromauf jeder vorgegebenen Betätigungsstellung befindet, hin zur Anschlagstellung zu bewirken, und während welcher der Rechner die Änderungen in dem den elektrischen Antrieb versorgenden elektrischen Strom detektiert, wenn das elastische Element (46) mit jedem Vorsprung (52) zusammenwirkt,
**dadurch gekennzeichnet, dass** der Rechner einen Befehl, um die Verlagerung des Rings (24) zu stoppen, bevor das elastische Element (46) mit dem zugeordneten Bereich (38) des feststehenden Anschlags (22) zusammenwirkt, ausgehend von der Detektion der Änderungen in dem den elektrischen Antrieb versorgenden elektrischen Strom, wenn das elastische Element (46) nacheinander mit den Vorsprüngen (52) zusammenwirkt, generiert.

8. Trommelbremse eines Fahrzeugs, insbesondere eines Kraftfahrzeugs, **dadurch gekennzeichnet, dass** sie ein Linearstellglied nach einem der Ansprüche 1 bis 6 umfasst.

9. Kraftfahrzeug, das eine Trommelbreme, einen Rechner und ein Linearstellglied nach einem der Ansprüche 1 bis 6 umfasst.

## Claims

1. A linear actuator of a drum brake for a vehicle, in particular a motor vehicle, which includes:
an electric motor drive; and
a stop device (20) including a fixed stop (22) and a ring (24) movably mounted relative to the fixed stop (22) according to a helical movement, which is moved by said electric motor drive,
wherein the ring (24) is movable relative to the fixed stop (22), from upstream to downstream along a helix axis between a plurality of actuation positions and a downstream stop position in which the ring (24) stops against the fixed stop (22), said stop position being located furthest downstream with respect to the actuation position,
wherein the ring (24) carries an elastic member (46) which cooperates with an associated portion (38) of the fixed stop (22) when the ring (24) is located in an actuation position located axially between the stop position and a predefined actuation position, to produce a resistive torque opposing the movement of the ring (24) towards the stop position,
wherein the electric motor drive includes a computer allowing detecting variations in the electric current powering the electric motor drive according to the value of said resistive torque,
**characterised in that** the fixed stop (22) includes at least one protrusion (52) with which the elastic member (46) cooperates when the ring (24) is in at least one other predefined actuation position located at a distance and upstream of the predefined actuation position to produce a variation of a resistive torque when said at least one protrusion (52) is crossed by the elastic member (46).

2. The linear actuator according to the preceding claim, **characterised in that** the fixed stop (22) includes several protrusions (52) with each of which the elastic member (46) cooperates successively during a movement of the ring (24) towards the stop position.

3. The linear actuator according to any one of the preceding claims, **characterised in that** the elastic member (46) includes a segment (50) extending parallel to the axis (A) of the helix which is intended to cooperate with the said portion (38) of the fixed stop (22) and with said at least one protrusion (52).

4. The linear actuator according to the preceding claim, **characterised in that** each protrusion (52) projects radially with respect to an annular wall (42) of the fixed stop (22), along which said annular wall (42), said segment of the elastic member (46) moves when the ring (24) moves towards the stop position.

5. The linear actuator according to any one of the preceding claims, **characterised in that** the section according to an axial plane of each protrusion (52) has a rounded shape.

6. The linear actuator according to any one of the preceding claims, **characterised in that** the fixed stop (22) includes a helical ramp (34) including a radial face (38) against which said segment (50) of the elastic member (46) is adapted to bear when the ring (24) is located in an actuation position located axially between the stop position and said predefined actuation position.

7. A method for controlling a linear actuator for a vehicle drum brake according to any one of the preceding claims, which includes a phase of powering the electric motor drive to cause a movement of the ring (24) from an upstream actuation position, which is located upstream of each predefined actuation position, towards the stop position, and during which the computer detects the variations in the electric current powering the electric motor drive, when the elastic member (46) cooperates with each protrusion (52),
**characterised in that** the computer generates a command to stop the movement of the ring (24) before the elastic member (46) cooperates with the associated portion (38) of the fixed stop (22) based on the detection of variations in the electric current powering the electric motor drive, when the elastic member (46) cooperates successively with the protrusions (52).

8. A drum brake for a vehicle, in particular a motor vehicle, **characterised in that** it includes a linear actuator according to any one of claims 1 to 6.

9. A motor vehicle including a drum brake, a computer and a linear actuator according to any one of claims 1 to 6.
